# EUROPEAN PATENT APPLICATION

(11) **EP 1 870 822 A1**
(43) Date of publication of application: **26.12.2007**
(21) Application number: 07109989.9
(22) Date of filing: 11.06.2007
(51) Int. Cl.: G06F 17/30, H04L 12/18

(54) **Graphical interface and method enabling a user to view and share geospatial data with an online community**

(30) Priority: 20.06.2006 US 805308 P; 01.12.2006 US 566090
(71) Applicant: Leica Geosystems AG, 9435 Heerbrugg (CH)
(72) Inventor: Antoine, Lennox Bertrand, Suwanee, GA 30024 (US)
(74) Representative: Büchel, Kaminski & Partner

(57) **Abstract**

A geospatial community facilitator including a plurality of clients and a server, wherein at least one client includes the geospatial data and a program for communicating the location on the client of the geospatial data to the server, and the server includes a session list, which includes a list of connected clients and the location of the geospatial data of each client, and a program for broadcasting at least the list of connected clients to one or more connected clients.

## Description

The invention relates to a graphical interface enabling a user to view and share geospatial data with one or more members of an online community according to Claim 1 and methods for sharing geospatial data with an online community according to Claims 14 and 20.

Typical servers for serving geospatial data, such as ArcIMS from ESRI of Redlands, California, require elaborate and expensive installations before users can begin sharing data in an enterprise environment. In addition, such servers typically do not give wide access to modify data and republish the modified data.

A geospatial community facilitator including a plurality of clients and a server, wherein at least one client includes the geospatial data and a client program for communicating the location on the client of the geospatial data to the server, and the server includes a session list, which includes a list of connected clients and the location of the geospatial data of each client, and a server program for broadcasting at least the list of connected clients to one or more connected clients, at least one of the server program and the client program including an instant messenger.

Figure 1 discloses an example of an environment in which one embodiment of the geospatial community facilitator can operate.

Figure 2 discloses an example user interface at the client according to one embodiment.

Figure 3 discloses aspects of an embodiment of the invention relating to collections of data, known as "my desktop."

The geospatial community facilitator according to one embodiment establishes an environment in which users can share raw or processed imagery or other data of their own creation. Users can even share processing engines or capability. Hundreds or thousands of users can share unique data and programs, such as scripts, images and models, and the sheer number of people involved increases the breadth and depth of the information available. For example, one user may build a realistic model of his house, or a prominent building in his hometown. Compounded thousands of times, a community of users may create a realistic model of an entire city with various levels of detail such that a city can be viewed as it appears from space or from any given street corner. The geospatial community facilitator described herein makes such large-scale efforts possible through cooperation and sharing. Various other aspects of exemplary embodiments of the invention are introduced below.

One aspect of embodiments of the invention is that web publishing of data can be implemented using a customizable HTML editor, and the publishing can be accomplished with a simple internet connection.

Yet other aspects of at least some embodiments of this invention concern customizable spherical visualization. Particularly, some embodiments include the ability to dynamically control terrain and replace selected portions with an actual TIN mesh so as to produce customized renditions of terrain. A related aspect is that users can publish a 'world' (terrain) with their own data. Moreover, users can compose their own scenes 'on the fly' and can also take advantage of GIS functionality such as blend and placing models on the terrain.

A further aspect of some embodiments of the invention concerns the use of a scripting language so as to enable users of the application to easily write their own scripts. Among other things, this functionality precludes the need to use a separate environment for testing/compilation of programming and will enable users to make changes and see the results in real time.

In addition to the ability to use the viewer functionality enabled by embodiments of the invention, a user will also be able, among other things, to mosaic large numbers of files, perform batch conversions/reprojections, generate contours, and perform vector/raster and raster/vector conversions.

Other aspects of example embodiments of the invention include, but are not limited to, spherical raster and terrain capability, movie/audio POI capability associated with links or displayed items, and meteorological event visualization (e.g., tornado, hurricane or other events) showing real time terrains along the path defined by the event(s).

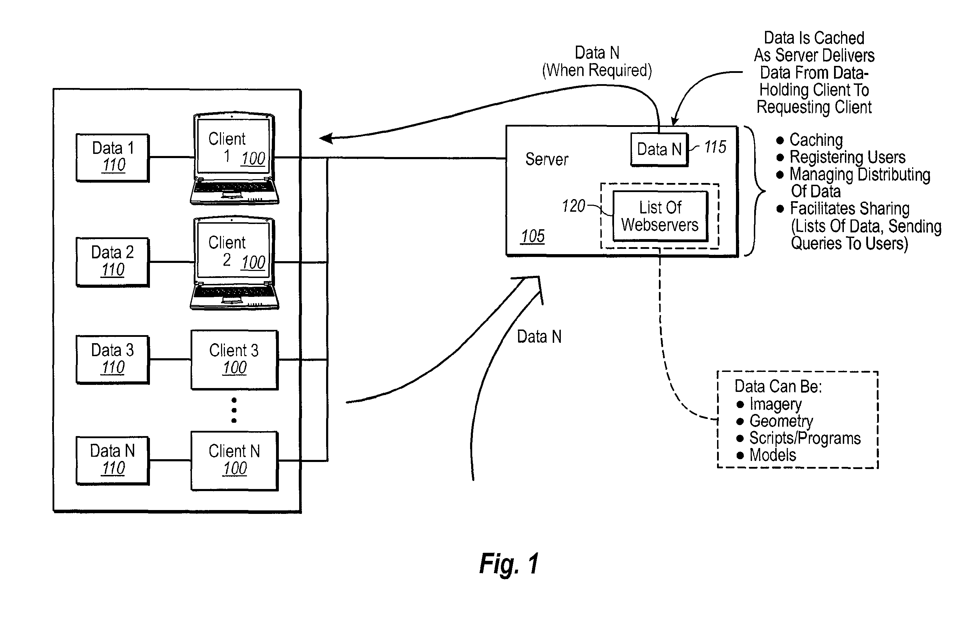

With attention now to the example disclosed in Figure 1, the geospatial community facilitator according to one embodiment is associated with a plurality of clients 100, each of which is connected to a server 105. The clients 100 can be any computing device that is capable of processing data, such as a laptop or desktop computer, a personal digital assistant, a cell phone, or a field surveying device such as those made by Leica Geosystems of Heerbrugg, Switzerland or Trimble Navigation of Sunnyvale, California. Each client 100 stores data, which may be in a variety of forms, such as imagery of some portion of the earth, other types of imagery, vector data, scripts or other kinds of small programs, music files, or geometry (which are objects that include position and topology information and can be used to represent real features in a scene, such as a scene representing a portion of the earth). In addition to these data types, the data can include models or renderings (including terrain models), text files, movie files or any other data meaningful to a human being when processed and displayed by a computer.

In the example disclosed in Figure 1, each client 100 includes at least one data item 110, such as an image file. For example, client 1 has stored on it data 1; client 2 has stored on it data 2; client 3 has stored on it data 3, and so on whereby arbitrary client N has data N stored on it. As suggested earlier, each of these data items 110 can be one or more of imagery, geometry, scripts, digital terrain models, models of real objects such as buildings, automobiles or people, and other things. The data item 110 may be data available from any number of commercial or free databases, or can be created by a user with various programs. For example, a user can write scripts that are place marked, or referenced, in the imagery, whereby the script begins executing and plays a video or a sound file as a user rolls over the place mark with his cursor. Place marking is a term that implies referencing data with other data. A more specific term used in the context of imagery of the Earth is georeferencing. To populate data with imagery, a user might, for example, purchase aerial photographs, satellite imagery, radiometric data and other things from the US Geological Survey (which sells such data under the name Earth Explorer on its Website), or he might personally acquire terrestrial photographs using a camera.

Users (e.g. of one of the clients 100) can publish their data item 110 by using the geospatial community facilitator program to indicate that they would like to share their data item 110 with the community. To share data, a user logs on to the geospatial community facilitator and specifies the files he wishes to share. The server 105 adds the shared files to a session list, which includes currently connected users and their available data. In at least some cases, the server 105 serves the list of connected users to all of those users who are connected whenever there is a change in the community - that is, whenever a user connects or logs off. Further, the server 105 may serve the list of available data whenever one user requests to see the data of another user; but the server 105 may also serve the whole list of available data as soon as a user connects and then serve changes as they occur.

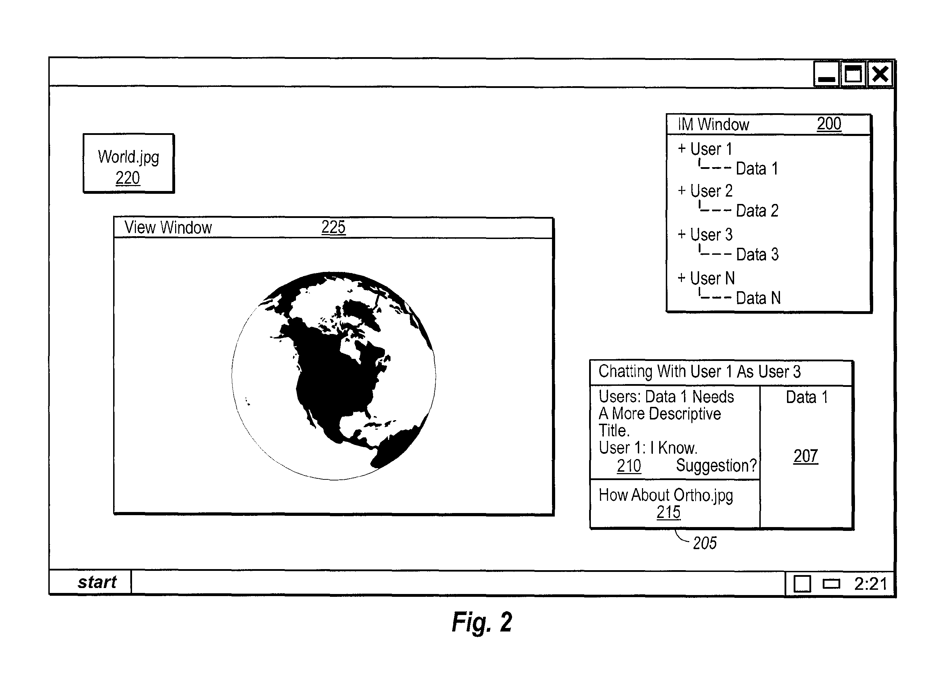

Figure 2 discloses aspects of an example of a process for sharing data. As shown in Figure 2, an Instant Messaging (IM) window 200 shows connected users (i.e., User 1, User 2, etc.). (User 3's handle may or may not appear in the IM window 200 on his or her own client computer, although his handle will appear in every other user's IM window 200, such as User 2's IM window 200). Suppose User 3 wishes to see the data available from another user, specifically User 1. In this example, User 3 selects, by double clicking for example, the handle for User 1 in the IM window 200 (in this case, the handle is named User 1), and the data User 1 has published (i.e., Data 1) appears below the User 1 handle.

In some embodiments, when a user selects the handle of another user, a chat window 205 opens up. The chat window 205 is labeled "Chatting with User 1 as User 3" in Figure 2 because, in the example of Figure 2, User 3 wished to view the data User 1 published. The chat window 205 is an Instant Messaging window in which users can chat while viewing the available imagery of the user with whom he is chatting. In the example chat window 205 shown in Figure 2, the list of User 1's data is shown in the right half 207 of the chat window 205, and the left half is split between the conversation in the top portion 210 and the edit window - in which User 1 can type his comment or question before sending it - in the bottom portion 215. This way, users can discuss matters relating to the imagery and plan new imagery or data they would like to create.

In one example embodiment, a user publishes data by dragging a representation of the data and dropping it in a receptacle for publication, using a "drag and drop" operation, which tells the server where to look for the data on the drive of the client computer. For example, in Figure 2, the data entitled "World.jpg" 220 is dragged to a "shared files" window or, alternatively, to the IM window 200. So, if User 1 has the World.jpg file 220 on his computer, he drags the World.jpg file 220 to the User 1 handle in the IM window 200 whereupon the World.jpg file 220 appears beneath the Data 1 data item. In this example, all of the other clients who have requested to see the data available from User 1, such as by double clicking the User 1 handle in their own IM windows 200, have their IM window 200 immediately updated to reflect the presence of the World.jpg file 220 from the User 1 because the server broadcasts to the clients a change in the data available from each client. Alternatively, the server at least broadcasts to those users who have asked to view the data that User 1 has published, though other criteria may additionally or alternatively be employed to direct the broadcast operations of the server. Another user, such as User 2, can display the published file in his view window by selecting the handle for the image (i.e., World.jpg 220) or dragging and dropping the handle into the view window 225. It should be noted that the viewing user, in this case User 2, does not necessarily view the data in the same format that the publishing user, in this case User 1, stores it because the data, in some examples, is compressed using lossy compression before being streamed to other users.

There are, of course, other ways for a user to publish his data to the community. For example, the geospatial community facilitator can open a prompt at the user's request (the user can request the prompt by, for example, selecting an icon in the graphical-user-interface of the community facilitator), wherein the prompt requests the files that the user wishes to publish to the server.

The data published by users can be specified using various attributes. By way of example, georeferencing images, models, vector shapes and other geospatial data types to create a globe or map can be employed. In addition, a user can set properties for a file he wishes to publish. Such properties may be described by a standard, but at any rate may include, but are not limited to, attributes such as color, extent, transparency, filter properties, and location properties (such as clamped to a certain point in the reference frame or floatable around the view window, rotation, etc). For dynamic content, a user can optionally set an event attribute that must occur to activate the data, such as a mouse click, rolling the curser over a bounding area, etc. The user can also add information, such as date, description and location, which may assist another user in searching for the file.

In addition to the management functions described in relation to publishing data, the server also caches data as it is requested. For example, if User 1 requests Data N from User N in the illustration of the example disclosed in Figure 1, Data N is cached 115 then served to User 1. If another client 100 also requests this same data N item, the server 105 can quickly serve it from the cache 115. The server 105 also may contain the data relating to registered users (such as names and account status) and manages the registration of users. To facilitate caching, the server 105 can be set up, for example, by including lists of Web servers 120. This way, rather than sending actual files to individual clients 100, the server 105 can send a URL and the clients 110 can download the data from the Web page located as indicated by the URL.

The server 105 is not limited to serving and sharing data however. The server 105 can also be used, for example, to share processing capability among clients 110. One user can publish a processing engine (e.g., a mosaicing engine) in the same manner as data is published (e.g., using an IM window). Other users who want to use the processing engine can specify the data that they want processed, optionally along with some parameters relating to the process, and the client 100 having the processing engine will process the data and send it back to the requesting user through the server.

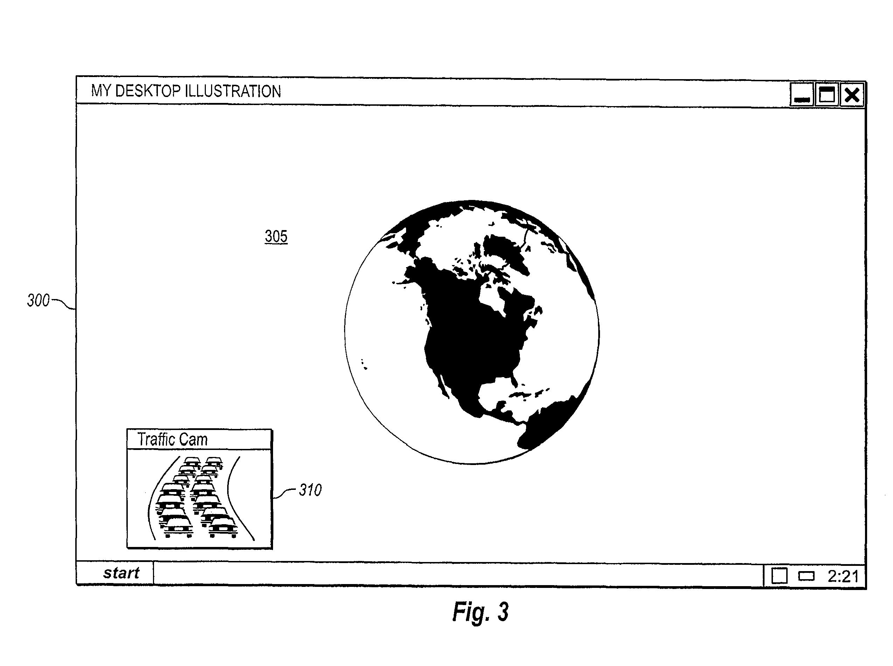

Figure 3 discloses further aspects of example embodiments. For example, Figure 3 discloses an example of publishing not only individual files, but an entire grouping of files or scenes or combinations of scripts and imagery and other data types. In this example, this combination of files is called "my desktop." The imagery and data can come from any number of sources, such as free weather websites, traffic websites, and government data sources, among other things. For example, Figure 3 illustrates a view window 300 displaying a globe of imagery 305 representing the Earth in the middle of the browser, and in the lower left-hand corner, a traffic video 310 is displayed and shows real-time traffic conditions via a Webcam streaming traffic video. The traffic video 310 can be taken from, for example, a website that provides such content and the right to distribute it for free. The arrangement of the imagery (e.g. imagery 305) and video (e.g. video 310) is determined by the data associated with "my desktop." That is, a "my desktop" specification file includes the imagery, the video and their initial display parameters. The "my desktop" file can be uploaded from its owner client in the same way as other data (e.g., through the IM window 200 of Figure 2). In addition, clients can save the "my desktop" file as their own and modify it as they desire, then publish the modified version.

In another example of "my desktop," a script can pull together data showing global cloud cover, and/or other phenomena, from various sources, weave the data together into an integrated whole and display the data so that a user can see the cloud cover over the whole globe in real time.

In light of the disclosure hereof, example embodiments may include a variety of different aspects. By way of example, a web publishing aspect of example embodiments automatically provides services to any user sharing data through Geospatial Instant Messenger. Through an easy to use and customizable HTML editor, example embodiments will attract users who may be disinclined to use other servers. In addition, at least some example embodiments, which use a geospatial instant messenger, have the potential to gain the world's largest database repository.

Embodiments can also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, DVD, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

## Claims

1. A graphical interface enabling a user to view and share geospatial data with one or more members of an online community, the graphical interface comprising:
• a first display element configured to provide a visual representation of each member of the online community, along with a selectable handle for accessing geospatial data accessible from each member of the online community;
• a second display element configured to graphically display the geospatial data accessed by the user; and
• a third display element including a field configured to receive user input associated with a conversation between the user and a member of the online community, the third display element further configured to display text transmitted by the user to the member of the online community and to display text received by the user from the member of the online community.

2. The graphical interface according to claim 1, wherein the first display element includes a graphical input field configured to allow the user to specify geospatial data stored on a computer hosting the graphical display such that the specified geospatial data is made accessible by the members of the online community.

3. The graphical interface according to claim 2, wherein the graphical input field is further configured to receive user input to allow access by a member of the online community to a program executable on the computer hosting the graphical display.

4. The graphical interface according to anyone of the preceding claims, wherein the first display element includes a field configured to receive user input regarding attributes of the shared geospatial data.

5. The graphical interface according to claim 4, wherein the attributes include georeferencing images, models, and/or vector shapes.

6. The graphical interface according to anyone of the preceding claims, wherein the first display element includes a graphical input field configured to receive user input regarding properties of the shared geospatial data.

7. The graphical interface according to claim 6, wherein the properties include color, extent, transparency, a filter property, and/or a location property.

8. The graphical interface according to anyone of the preceding claims, wherein the first display element includes a graphical input field configured to receive addition of information to the geospatial data.

9. The graphical interface according to claim 8, wherein the information includes date, description, and/or location information.

10. The graphical interface according to anyone of the preceding claims, further comprising a fourth display element configured to display imagery and/or data provided by a remote website.

11. The graphical interface according to claim 10, wherein the imagery and/or data provided by the remote website includes real-time traffic video and/or weather related imagery.

12. The graphical interface according to anyone of the preceding claims, wherein the first display element is an Instant Messaging window, the second display element is a view window, and the third display element is a chat window, wherein a display by the view window of geospatial data is responsive to dragging a handle from the IM window into the view window.

13. One or more media on which is stored executable instructions for viewing and sharing at least geospatial data, the executable instructions, when executed by a computing device, are operative to display the graphical interface of claim 1.

14. A method for sharing geospatial data with an online community, comprising the following acts:
• retrieving a session list data structure from a server, the session list data structure listing a location of geospatial data designated as accessible by one or more clients coupled to the server;
• displaying information describing the one or more clients coupled to the server and a handle associated with geospatial data stored at each client;
• displaying geospatial data accessed from the one or more clients coupled to the server; and
• displaying transmitted text and received text representing a real-time chat conversation between a user of a computing device displaying the geospatial data and at least one user of the one or more clients coupled to the server.

15. The method according to claim 14, further comprising displaying data hosted by a remote website.

16. The method according to claim 15, wherein:
• the information describing the one or more clients coupled to the server and geospatial data stored at each client is displayed in a first window of a display coupled to a computing device;
• the geospatial data accessed from the one or more clients coupled to the server is displayed in a second window of the display;
• the transmitted text and received text representing a real-time chat conversation between a user of the computing device and at least one user of the one or more clients coupled to the server is displayed in a third window of the display; and
• the data hosted by a remote website is displayed in a fourth window of the display.

17. The method according to anyone of the preceding claims 14 to 16, wherein the session list data structure further lists a location of a geospatial data processing program designated as accessible by the one or more clients coupled to the server, the method further comprising:
• transmitting geospatial data to the location of the geospatial data processing program; and
• receiving processed geospatial data after the geospatial data has been processed by the geospatial data processing program.

18. The method according to anyone of the preceding claims 14 to 17, further comprising:
• providing a location to the server of a geospatial data processing program designated as accessible by a user of the computing device;
• receiving geospatial data from the server and/or from the one or more clients;
• processing the received geospatial data using the geospatial data processing program; and
• transmitting the processed geospatial data to the server and/or the one or more clients.

19. The method according to claim 18, wherein processing the geospatial data includes performing a mosaic function, generating a contour, performing a vector to raster conversion and/or performing a raster to vector conversion.

20. A method for sharing geospatial data with an online community, comprising the following acts:
• constructing a session list data structure, the session list data structure including a list of one or more clients connected to a server, the session list data structure further including information regarding a location for geospatial data stored by at least one of the clients; and
• broadcasting the session list data structure to one or more of the one or more clients.

21. The method according to claim 20, further comprising receiving from a first client information regarding a location of geospatial data stored by the first client; and wherein the session list data structure is updated to include the location of geospatial data stored by the first client.

22. The method according to anyone of the preceding claims 20 to 21, wherein the session list data structure further includes information regarding a location of a program for processing geospatial data on the one or more clients.

23. The method according to anyone of the preceding claims 20 to 22, wherein the method further includes receiving first geospatial data from a first connected client and broadcasting the first geospatial data to a second connected client.

24. The method according to claim 23, further comprising storing the broadcasted first geospatial data in an accessible location at the server.

25. The method according to anyone of the preceding claims 20 to 24, wherein the act of broadcasting the session list data structure is performed when a change in the one or more connected clients of the online community occurs, a change in geospatial data stored at the one or more clients occurs, and/or a request for the session list is received from the one or more clients.

26. The method according to anyone of the preceding claims 20 to 25, further comprising broadcasting a URL to one or more of the connected clients, the URL associated with a website where geospatial data is downloadable by the one or more connected clients.

27. A computer readable medium or computer data signal having computer-executable instructions for performing the method according to anyone of the claims 14 to 26, particularly when executed by a computing device.
